# EUROPEAN PATENT APPLICATION

(11) **EP 3 780 590 A1**
(43) Date of publication of application: **17.02.2021**
(21) Application number: 20199890.3
(22) Date of filing: 13.03.2015
(51) Int. Cl.: H04N 7/14

(54) **A SYSTEM AND METHOD FOR AUGMENTED REALITY-ENABLED INTERACTIONS AND COLLABORATION**

(30) Priority: 31.03.2014 US 201414231375
(62) Divisional of application: 15773862.6
(71) Applicant: HUAWEI TECHNOLOGIES CO., LTD., Shenzhen, Guangdong 518129 (CN)
(72) Inventor: EHMANN, Jana, San Francisco, CA 94107 (US); ZHOU, Liang, Mianyang, Sichuan 621100 (CN); GULERYUZ, Onur G, San Francisco, CA 94107 (US); LV, Fengjun, Sunnyvale, CA 94086 (US); ZHU, Fengqing, Sunnyvale, CA 94086 (US); DHAR, Naveen, San Jose, CA 95135 (US)
(74) Representative: Gill Jennings & Every LLP

(57) **Abstract**

Embodiments of the present invention provide a novel system and/or method for performing over-the-network collaborations and interactions between remote end-users. Embodiments of the present invention produce the perceived effect of each user sharing a same physical workspace while each person is actually located in separate physical environments. In this manner, embodiments of the present invention allow for more seamless interactions between users while relieving them of the burden of using common computer peripheral devices such as mice, keyboards, and other hardware often used to perform such interactions.

## Description

### BACKGROUND OF THE INVENTION

Remote collaboration technologies, such as video conferencing software, are used to conference multiple users from remote locations together by way of simultaneous two-way transmissions. However, many conventional systems for performing such tasks are unable to establish communication environments in which participants are able to enjoy a sense of shared presence within the same physical workspace. As such, collaborations and interactions performed over a communications network between remote users can be a difficult task. Accordingly, a need exists for a solution that provides participants of collaborative sessions performed over communication networks with the sensation of sharing a same physical workspace with each other in a manner that also improves user experience during such events.

### SUMMARY OF THE INVENTION

Embodiments of the present invention provide a novel system and/or method for performing over-the-network collaborations and interactions between remote end-users. Embodiments of the present invention produce the perceived effect of each user sharing a same physical workspace while each person is actually located in separate physical environments. In this manner, embodiments of the present invention allow for more seamless interactions between users while relieving them of the burden of using common computer peripheral devices such as mice, keyboards, and other hardware often used to perform such interactions.

### BRIEF DESCRIPTION OF THE DRAWINGS

The accompanying drawings, which are incorporated in and form a part of this specification and in which like numerals depict like elements, illustrate embodiments of the present disclosure and, together with the description, serve to explain the principles of the disclosure.
Figure **1A** depicts an exemplary hardware configuration implemented on a client device for performing augmented reality-enabled interactions and collaborations in accordance with embodiments of the present invention.
Figure **1B** depicts exemplary components resident in memory executed by a client device for performing augmented reality-enabled interactions and collaborations in accordance with embodiments of the present invention.
Figure **2** depicts an exemplary local media data computing module for capturing real-world information in real-time from a local environment during performance of augmented reality-enabled interactions and collaborations in accordance with embodiments of the present invention.
Figure **3** depicts an exemplary remote media data computing module for processing data received from remote client devices over a communications network during performance of augmented reality-enabled interactions and collaborations in accordance with embodiments of the present invention.
Figure **4** depicts an exemplary object-based virtual space composition module for generating a virtualized workspace display for performing augmented reality-enabled interactions and collaborations in accordance with embodiments of the present invention.
Figure **5** depicts an exemplary a multi-client real-time communication for performing augmented reality-enabled interactions and collaborations in accordance with embodiments of the presentation.
Figure **6A** is a flowchart of an exemplary computer-implemented method for generating local media data during a collaborative session performed over a communications network in accordance with embodiments of the present invention.
Figure **6B** is a flowchart of an exemplary computer-implemented method of generating configurational data for creating a virtual workspace display for a collaborative session performed over a communication s network in accordance with embodiments of the present invention.
Figure **6C** is a flowchart of an exemplary computer-implemented method of contemporaneously rendering a virtual workspace display and detecting gesture input during a collaborative session performed over a communications network in accordance with embodiments of the present invention.
Figure **7A** depicts an exemplary use case for performing augmented reality-enabled interactions and collaborations in accordance with embodiments of the present invention.
Figure **7B** depicts another exemplary use case for performing augmented reality-enabled interactions and collaborations in accordance with embodiments of the present invention.
Figure **7C** depicts yet another exemplary use case for performing augmented reality-enabled interactions and collaborations in accordance with embodiments of the present invention.

### DETAILED DESCRIPTION

Reference will now be made in detail to the various embodiments of the present disclosure, examples of which are illustrated in the accompanying drawings. While described in conjunction with these embodiments, it will be understood that they are not intended to limit the disclosure to these embodiments. On the contrary, the disclosure is intended to cover alternatives, modifications and equivalents, which can be included within the scope of the disclosure as defined by the appended claims. Furthermore, in the following detailed description of the present disclosure, numerous specific details are set forth in order to provide a thorough understanding of the present disclosure. However, it will be understood that the present disclosure can be practiced without these specific details. In other instances, well-known methods, procedures, components, and circuits have not been described in detail so as not to unnecessarily obscure aspects of the present disclosure.

Reference will now be made in detail to the preferred embodiments of the claimed subject matter, a method and system for the use of a radiographic system, examples of which are illustrated in the accompanying drawings. While the claimed subject matter will be described in conjunction with the preferred embodiments, it will be understood that they are not intended to limit these embodiments. On the contrary, the claimed subject matter is intended to cover alternatives, modifications and equivalents, which may be included within the scope as defined by the appended claims.

Furthermore, in the following detailed descriptions of embodiments of the claimed subject matter, numerous specific details are set forth in order to provide a thorough understanding of the claimed subject matter. However, it will be recognized by one of ordinary skill in the art that the claimed subject matter may be practiced without these specific details. In other instances, well known methods, procedures, components, and circuits have not been described in detail as not to obscure unnecessarily aspects of the claimed subject matter.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present claimed subject matter, discussions utilizing terms such as "capturing", "receiving", "rendering" or the like, refer to the action and processes of a computer system or integrated circuit, or similar electronic computing device, including an embedded system, that manipulates and transforms data represented as physical (electronic) quantities within the computer system's registers and memories into other data similarly represented as physical quantities within the computer system memories or registers or other such information storage, transmission or display devices.

Accordingly, embodiments of present invention provide a system and/or method for performing augmented reality-enabled interactions and collaborations.

### EXEMPLARY CLIENT DEVICE FOR PERFORMING AUGMENTED REALITY-ENABLED INTERACTIONS AND COLLABORATIONS

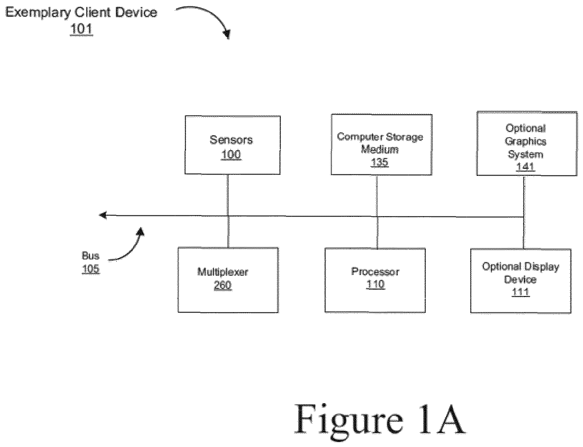

Figure **1A** depicts an exemplary hardware configuration used by various embodiments of the present invention. Although specific components are disclosed in Figure **1A**, it should be appreciated that such components are exemplary. That is, embodiments of the present invention are well suited to having various other hardware components or variations of the components recited in Figure **1A****.** It is appreciated that the hardware components in Figure **1A** can operate with other components than those presented, and that not all of the hardware components described in Figure **1A** are required to achieve the goals of the present invention.

Client device **101** can be implemented as an electronic device capable of communicating with other remote computer systems over a communications network. Client device **101** can be implemented as, for example, a digital camera, cell phone camera, portable electronic device (e.g., audio device, entertainment device, handheld device), webcam, video device (e.g., camcorder) and the like. Components of client device **101** can comprise respective functionality to determine and configure respective optical properties and settings including, but not limited to, focus, exposure, color or white balance, and areas of interest (e.g., via a focus motor, aperture control, etc.). Furthermore, components of client device **101** can be coupled via internal communications bus **105** and receive/transmit image data for further processing over such communications bus.

In its most basic hardware configuration, client device **101** can comprise sensors **100**, computer storage medium **135**, optional graphics system **141**, multiplexer **260**, processor **110**, and optional display device **111.**

Sensors **100** can include a plurality of sensors arranged in a manner that captures different forms of real-world information in real-time from a localized environment external to client device **101.** Optional graphics system **141** can include a graphics processor (not pictured) operable to process instructions from applications resident in computer readable storage medium **135** and to communicate data with processor **110** via internal bus **105.** Data can be communicated in this fashion for rendering the data on optional display device **111** using frame memory buffer(s).

In this manner, optional graphics system **141** can generate pixel data for output images from rendering commands and may be configured as multiple virtual graphic processors that are used in parallel (concurrently) by a number of applications executing in parallel. Multiplexer **260** includes the functionality to transmit data both locally and over a communications network. As such, multiplexer **260** can multiplex outbound data communicated from client device **101** as well as de-multiplex inbound data received by client device **101.** Depending on the exact configuration and type of client device, computer readable storage medium **135** can be volatile (such as RAM), non-volatile (such as ROM, flash memory, etc.) or some combination of the two. Portions of computer readable storage medium **135**, when executed, facilitate efficient execution of memory operations or requests for groups of threads.

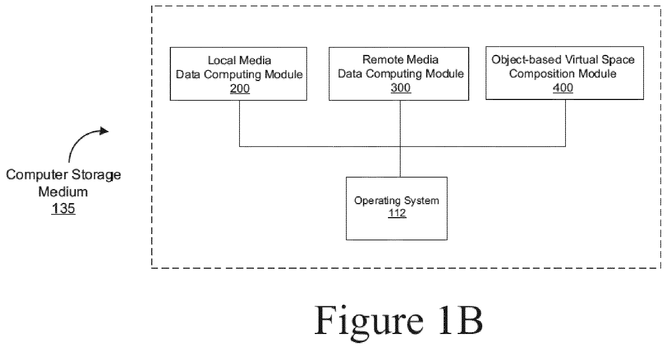

Figure **1B** depicts exemplary computer storage medium components used by various embodiments of the present invention. Although specific components are disclosed in Figure **1B**, it should be appreciated that such computer storage medium components are exemplary. That is, embodiments of the present invention are well suited to having various other components or variations of the computer storage medium components recited in Figure **1B****.** It is appreciated that the components in Figure **1B** can operate with other components than those presented, and that not all of the computer storage medium components described in Figure **1B** are required to achieve the goals of the present invention.

As depicted in Figure **1B**, computer readable storage medium **135** can include an operating system (e.g., operating system **112**). Operating system **112** can be loaded into processor **110** when client device **101** is initialized. Also, upon execution by processor **110**, operating system **112** can be configured to supply a programmatic interface to client device **101.** Furthermore, as illustrated in Figure **1B**, computer readable storage medium **135** can include local media data computing module **200**, remote media data computing module **300** and object-based virtual space composition module **400**, which can provide instructions to processor **110** for processing via internal bus **105.** Accordingly, the functionality of local media data computing module **200**, remote media data computing module **300** and object-based virtual space composition module **400** will now be discussed in greater detail.

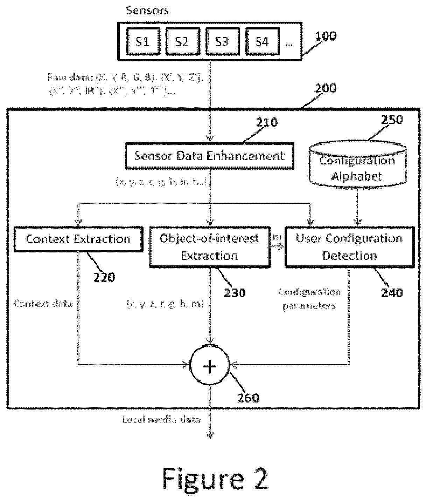

Figure **2** describes the functionality of local media data computing module **200** in greater detail in accordance with embodiments of the present invention. As illustrated in Figure **2**, sensors **100** includes a set of sensors (e.g., S1, S2, S3, S4, etc.) arranged in a manner that captures different forms of real-world information in real-time from a localized environment external to client device **101.** As such, different sensors within sensors **100** can capture various forms of external data such as video (e.g., RGB data), depth information, infrared reflection data, thermal data, etc. For example, an exemplary set of data gathered by sensors **100** at time *tᵢ*, may be depicted as:
(X, Y, R, G, B) for texture (image) data;
(X', Y', Z') for depth data;
(X", Y", IR") for infrared data;
(X"', Y"', T'") for thermal data
where X and Y represent spatial coordinates and prime marks denote different coordinate systems; R, G, and B values each represent a respective color channel value (e.g., red, green and blue channels, respectively); Z represents a depth value; IR represents infrared values; and T represents thermal data. In this manner, client device **101** can acquire a set of readings from different sensors within sensors **100** at any given time in the form of data maps.

Sensor data enhancement module **210** includes the functionality to pre-process data received via sensors **100** before being passed on to other modules within client device **101** (e.g., context extraction **220**, object-of-interest extraction **230**, user configuration detection **240**, etc.). For example, raw data obtained by each of the different sensors within sensors **100** may not necessarily correspond to a same spatial coordinate system. As such, sensor data enhancement module **210** can perform alignment procedures such that each measurement obtained by sensors within sensors **100** can be harmonized into one unified coordinate system. In this manner, information acquired from the different sensors can be combined and analyzed jointly by other modules within client device **101.**

For example, during alignment procedures, sensor data enhancement module **210** can calibrate the appropriate transformation matrices for each sensor's data into a referent coordinate system. In one instance, the referent coordinate system created by sensor data enhancement module **210** may be the intrinsic coordinate system of one of the sensors of sensors **100** (e.g., video sensor) or a new coordinate system that is not associated with any of the sensors' respective coordinate systems. For example, a resultant set of transforms applied to raw sensor data acquired by a sensor acquiring color (e.g., video sensor) may be depicted as:
(X*, Y*, R*, G*, B*) = T_{rgb} (X, Y, R, G, B) for texture (image) data;
(X*, Y*, Z*) = T_{z}(X', Y', Z') for depth data;
(X*, Y*, (IR)*) = Tᵢᵣ (X", Y", IR") for infrared data;
(X*, Y*, T*) = Tₜ (X"', Y"', T'") for thermal data
where the transforms T_{rgb}, T_{z}, Tᵢᵣ, and Tₜ have been previously determined by registration procedures for each sensor of sensors **100.** Transforms T can be affine transforms (i.e. T(v) = Av + b, where v is the input vector to be transformed, A is a matrix, and b is another vector), linear transforms, or nonlinear transforms. After the performance of alignment procedures, each point in the referent coordinate system, described by (X*, Y*) should have associated values from all the input sensors.

In certain scenarios, data obtained from sensors **100** can be noisy. Additionally, data maps can contain points at which the values are not known or defined, either due to the imperfections of a particular sensor or as a result of re-aligning the data from different viewpoints in space. As such, sensor data enhancement module **210** can also perform corrections to values of signals corrupted by noise or where the values of signals are not defined at all. Accordingly, the output data of sensor data enhancement module **210** can be in the form of updated measurement maps (e.g., denoted as (x, y, z, r, g, b, ir, t...) in Figure **2**) which can then be passed to other components within client device **101** for further processing.

Object-of-interest extraction module **230** includes the functionality to segment a local user and/or any other object of interest (e.g., various physical objects that the local user wants to present to the remote users, physical documents relevant for the collaboration, etc.) based on data received via sensor data enhancement module **210** during a current collaborative session (e.g., teleconference, telepresence, etc.). Object-of-interest extraction module **230** can detect objects of interest by using external data gathered via sensors **100** (e.g., RGB data, infrared data, thermal data) or by combining the different sources and processing them jointly. In this manner, object-of-interest extraction module **230** can apply different computer-implemented RGB segmentation procedures, such as watershed, mean shift, etc., to detect users and/or objects. As illustrated in Figure 2, the resultant output produced by object-of-interest extraction module **230** (e.g., (x,y,z,r,g,b,m)) can include depth data (e.g., coordinates (x,y,z)) and/or RGB map data (e.g., coordinates (r,g,b)), along with object-of-interest data map (m). For example, further information and details regarding RGB segmentation procedures may be found with reference to U.S. Provisional Application No. 61/869,574 entitled "TEMPORALLY COHERENT SEGMENTATION OF RGBt VOLUMES WITH AID OF NOISY OR INCOMPLETE AUXILIARY DATA," which was filed on August 23, 2013 by inventor Jana Ehmann, which is incorporated herein by reference in its entirety. This result can be then forwarded to multiplexer **260**, as well as to the user configuration detection module **240** for further processing.

Context extraction module **220** includes the functionality to automatically extract high-level information concerning local users within their respective environments from data received via sensor data enhancement module **210.** For instance, context extraction module **220** can use computer-implemented procedures to analyze data received from sensor data enhancement module **210** concerning a local user's body temperature and/or determine a user's current mood (e.g., angry, bored, etc.). As such, based on this data, context extraction module **220** can inferentially determine whether the user is actively engaged within a current collaborative session.

In another example, context extraction module **220** can analyze the facial expressions, posture and movement of a local user to determine user engagement. Determinations made by context extraction module **220** can be sent as context data to the multiplexer **260**, which further transmits the data both locally and over a communications network. In this manner, context data may be made available to the remote participants of a current collaborative session or it can affect the way the data is presented to the local user locally.

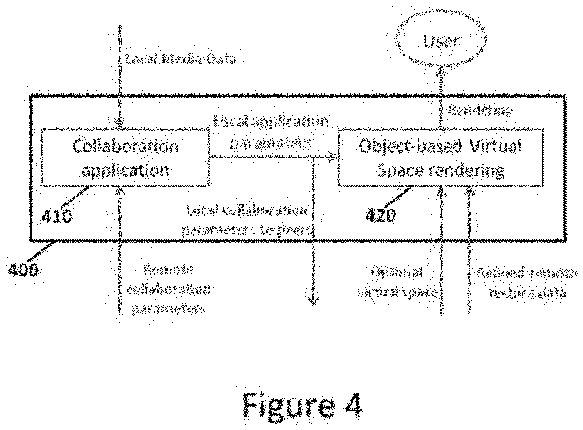

User configuration detection module **240** includes the functionality to use data processed by object-of-interest extraction module **230** to determine the presence of a recognized gesture performed by a detected user and/or object. For example, in one embodiment, user configuration detection module **240** can detect and extract a subset of points associated with a detected user's hand. As such, user configuration detection module **240** can then further classify and label points of the hand as a finger or palm. Hand features can be detected and computed based on the available configurations in known to configuration alphabet **250**, such as hand pose, finger pose, relative motion between hands, etc. Additionally, user configuration detection module **240** can detect in-air gestures, such as, for example, "hand waving," or "sweeping to the right." In this manner, user configuration detection module **240** can use a configuration database to determine how to translate a detected configuration (hand pose, finger pose, motion etc.) into a detected in-air gesture. The extracted hand features and, if detected, information about the in-air gesture can then be sent to object-based virtual space composition module **400** (e.g., see Figure 4) for further processing.

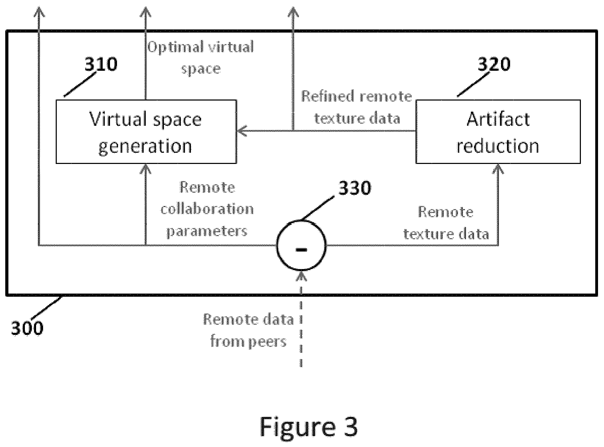

Figure **3** describes the functionality of remote media data computing module **300** in greater detail in accordance with embodiments of the present invention. Remote media data computing module **300** includes the functionality to receive multiplexed data from remote client device peers (e.g., local media data generated by remote client devices in a manner similar to client device **101**) and de-multiplex the inbound data via de-multiplexer **330.** Data can be de-multiplexed into remote collaboration parameters (that include remote context data) and remote texture data, which includes depth (x, y, z), texture (r, g, b) and/or object-of-interest (*m*) data from the remote peers' physical environments. As such, this information can then be distributed to different components within client device **101** for further processing.

Artifact reduction module **320** includes the functionality receive remote texture data from de-multiplexer **330** and minimize the appearance of segmentation errors to create a more visually pleasing rendering of remote user environments. In order to increase the appeal of the subject's rendering in the virtual space and to hide the segmentation artifacts such as noisy boundaries, missing regions etc., the blending of the segmented user and/or the background of the user can be accomplished through computer-implemented procedures involving contour-hatching textures. Further information and details regarding segmentation procedures may be found with reference to U.S. Patent Publication. No. US 2013/0265382 A1 entitled "VISUAL CONDITIONING FOR AUGMENTED-REALITY-ASSISTED VIDEO CONFERENCING," which was filed on December 31, 2012 by inventors Onur G. Guleryuz and Antonius Kalker, which is incorporated herein by reference in its entirety. These procedures can wrap the user boundaries and reduce the appearance of segmentation imperfections.

Artifact reduction module **320** can also determine the regions within remote user environments that need to be masked, based on potential estimated errors of a given subject's segmentation boundary. Additionally, artifact reduction module **320** can perform various optimization procedures that may include, but are not limited to, adjusting the lighting of the user's visuals, changing the contrast, performing color correction, etc. As such, refined remote texture data can be forwarded to the object-based virtual space composition module **400** and/or virtual space generation module **310** for further processing.

Virtual space generation module **310** includes the functionality to configure the appearance of a virtual workspace for a current collaborative session. For instance, based on a set of pre-determined system settings, virtual space generation module **310** can select a room size or room type (e.g., conference room, lecture hall, etc.) and insert and/or position virtual furniture within the room selected. In this manner, virtualized chairs, desks, tables, etc. can be rendered to give the effect of each participant being seated in the same physical environment during a session. Also, within this virtualized environment, other relevant objects such as boards, slides, presentation screens, etc. that are necessary for the collaborative session can also be included within the virtualized workspace.

Additionally, virtual space generation module **310** can enable users to be rendered in a manner that hides the differences within their respective native physical environments during a current collaborative session. Furthermore, virtual space generation module **310** can adjust the appearance of the virtual workspace such that users from various different remote environments can be rendered in a more visually pleasing fashion. For example, subjects of interest that are further away from their respective cameras can appear disproportionally smaller than those subjects that are closer to their respective cameras. As such, virtual space generation module **310** can adjust the appearance of subjects by utilizing the depth information about each subject participating in a collaborative session as well as other objects of interest. In this manner, virtual space generation module **310** can be configured to select a scale to render the appearance of users such that they can fit within the dimensions of a given display based on a pre-determined layout conformity metric.

Furthermore, virtual space generation module **310** can also ensure that the color, lighting, contrast, etc. of the virtual workspace forms a more visually pleasing combination with the appearances of each user. The colors of certain components within the virtual workspace (e.g., walls, backgrounds, furniture, etc.) can be adjusted in accordance to a pre-determined color conformity metric that measures the pleasantness of the composite renderings of the virtual workspace as well as the participants of a collaboration session. As such, maximization of the layout conformity metric and the color conformity metric can result in a number of different virtual environments. Accordingly, virtual space generation module **310** can generate an optimal virtual environment for a given task/collaboration session for any number of users. Accordingly, results generated by virtual space generation module **310** can be communicated to object-based virtual space composition module **400** for further processing.

Figure **4** describes the functionality of object-based virtual space composition module **400** in greater detail in accordance with embodiments of the present invention. Collaboration application module **410** includes the functionality to receive local media data from local media data computing module **200**, as well as any remote collaboration parameters (e.g., gesture data, type status indicator data) from remote media data computing module **300.** Based on the data received, collaboration application module **410** can perform various functions that enable a user to interact with other participants during a current collaboration.

For instance, collaboration application module **410** includes the functionality to process gesture data received via user configuration detection module **240** and/or determine whether a local user or a remote user wishes to manipulate a particular object rendered on their respective display screens during a current collaboration session. In this manner, collaboration application module **410** can serve a gesture control interface that enables participants of a collaborative session to freely manipulate digital media objects (e.g., slide presentation, documents, etc.) rendered on their respective display screens, without a specific user maintaining complete control over the entire collaboration session.

For example, collaboration application module **410** can be configured to perform in-air gesture detection and/or control collaboration objects. In this manner, collaboration application module **410** can translate detected hand gestures, such as swiping (e.g., swiping the hand to the right) and determine a corresponding action to be performed in response to the gesture detected (e.g., returning to a previous slide in response to detecting the hand swipe gesture). In one embodiment, collaboration application module **410** can be configured to detect touch input provided by a user via a touch sensitive display panel which expresses the user's desire to manipulate an object currently rendered on the user's local display screen. Manipulation of on-screen data can involve at least one participant and one digital media object. Additionally, collaboration application module **410** can be configured to recognize permissions set for a given collaborative session (e.g., which user is the owner of a particular collaborative process, which user is allowed to manipulate certain media objects, etc.). As such, collaboration application module **410** can enable multiple users to control the same object and/or different objects rendered on their local display screens.

With the assistance of a local graphics system (e.g., optional graphics system **141**), object-based virtual space rendering module **420** can render the virtual workspace display using data received from remote client devices and data generated locally (e.g., presentation data, context data, data generated by collaboration application module **410**, etc.). In this manner, object-based virtual space rendering module **420** can feed virtual space parameters to a local graphics system for rendering a display to a user (e.g., via optional display device **111**). As such, the resultant virtual workspace display generated by object-based virtual space rendering module **420** enables a local user to perceive the effect of sharing a common physical workspace with all remote users participating in a current collaborative session.

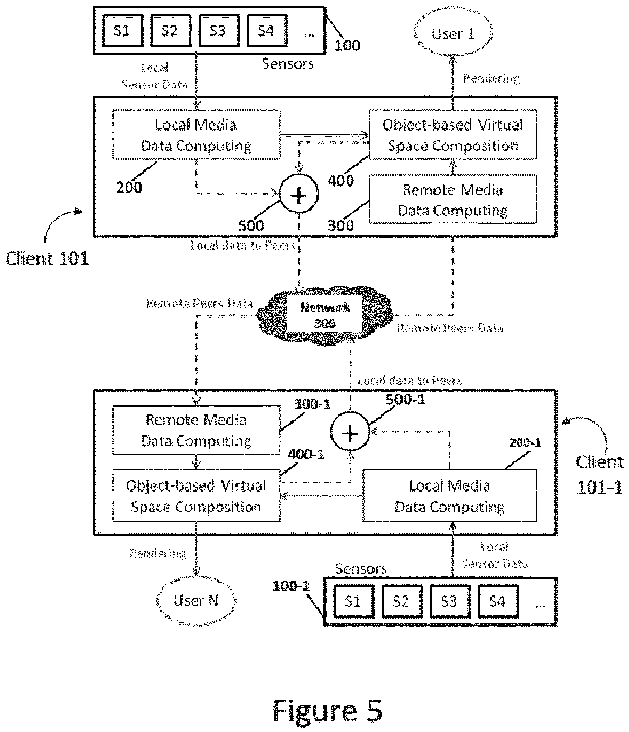

Figure **5** depicts an exemplary a multi-client, real-time communication in accordance with embodiments of the presentation. Figure **5** depicts two client devices (e.g., client devices **101** and **101-1**) exchanging information over a communication network during the performance of a collaborative session. Accordingly, as illustrated in Figure **5**, client devices **101** and **101-1** can each include a set of sensors **100** that are capable of capturing information from their respective local environments. In a manner described *herein,* local media data computing modules **200** and **200-1** can analyze their respect local data while remote media data computing modules **300** and **300-1** analyze the data received from each other. Accordingly, in a manner described *herein,* object-based virtual space composition modules **400** and **400-1** can combine their respective local and remote data for the final presentation to their respective local users for the duration of a collaborative session.

### EXEMPLARY METHOD FOR PERFORMING AUGMENTED REALITY-ENABLED INTERACTIONS AND COLLABORATIONS

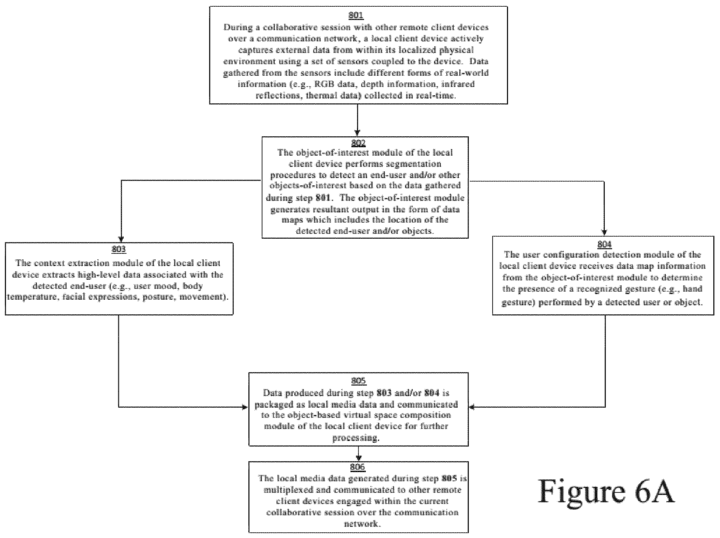

Figure **6A** is a flowchart of an exemplary computer-implemented method for generating local media data during a collaborative session performed over a communications network in accordance with embodiments of the present invention.

At step **801**, during a collaborative session with other remote client devices over a communication network, a local client device actively captures external data from within its localized physical environment using a set of sensors coupled to the device. Data gathered from the sensors include different forms of real-world information (e.g., RGB data, depth information, infrared reflection data, thermal data) collected in real-time.

At step **802**, the object-of-interest module of the local client device performs segmentation procedures to detect an end-user and/or other objects of interest based on the data gathered during step **801.** The object-of-interest module generates resultant output in the form of data maps which includes the location of the detected end-user and/or objects.

At step **803**, the context extraction module of the local client device extracts high-level data associated with the end-user (e.g., user mood, body temperature, facial expressions, posture, movement).

At step **804**, the user configuration module of the local client device receives data map information from the object-of-interest module to determine the presence of a recognized gesture (e.g., hand gesture) performed by a detected user or object.

At step **805**, data produced during step **803** and/or **804** is packaged as local media data and communicated to the object-based virtual space composition module of the local client device for further processing.

At step **806**, the local media generated during step **805** is multiplexed and communicated to other remote client devices engaged within the current collaborative session over the communication network.

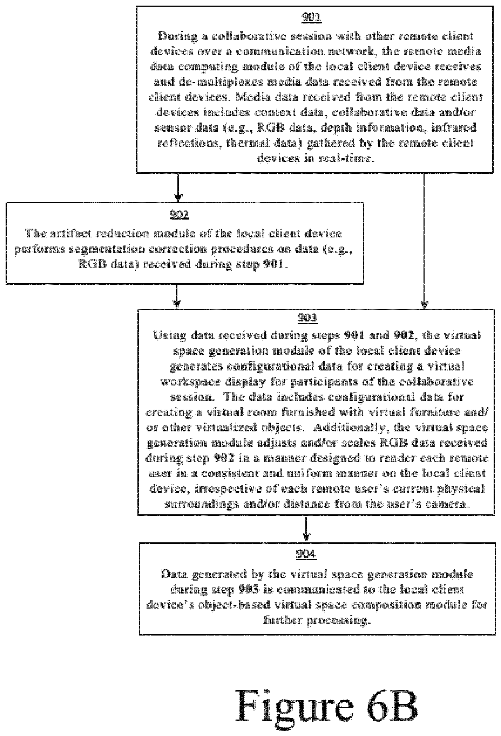

Figure **6B** is a flowchart of an exemplary computer-implemented method of generating configurational data for creating a virtual workspace display for a collaborative session performed over a communications network in accordance with embodiments of the present invention.

At step **901**, during a collaborative session with other remote client devices over a communication network, the remote media data computing module of the local client device receives and de-multiplexes media data received from the remote client devices. Media data received from the remote client devices includes context data, collaborative data and/or sensor data (e.g., RGB data, depth information, infrared reflections, thermal data) gathered by the remote client devices in real-time.

At step **902**, the artifact reduction module of the local client device performs segmentation correction procedures on data (e.g., RGB data) received during step **901.**

At step **903**, using data received during steps **901** and **902**, the virtual space generation module of the local client device generates configurational data for creating a virtual workspace display for participants of the collaborative session. The data includes configurational data for creating a virtual room furnished with virtual furniture and/or other virtualized objects. Additionally, the virtual space generation module adjusts and/or scales RGB data received during step **902** in a manner designed to render each remote user in a consistent and uniform manner on the local client device, irrespective of each remote user's current physical surroundings and/or distance from the user's camera.

At step **904**, data generated by the virtual space generation module during step **903** is communicated to the local client device's object-based virtual space composition module for further processing.

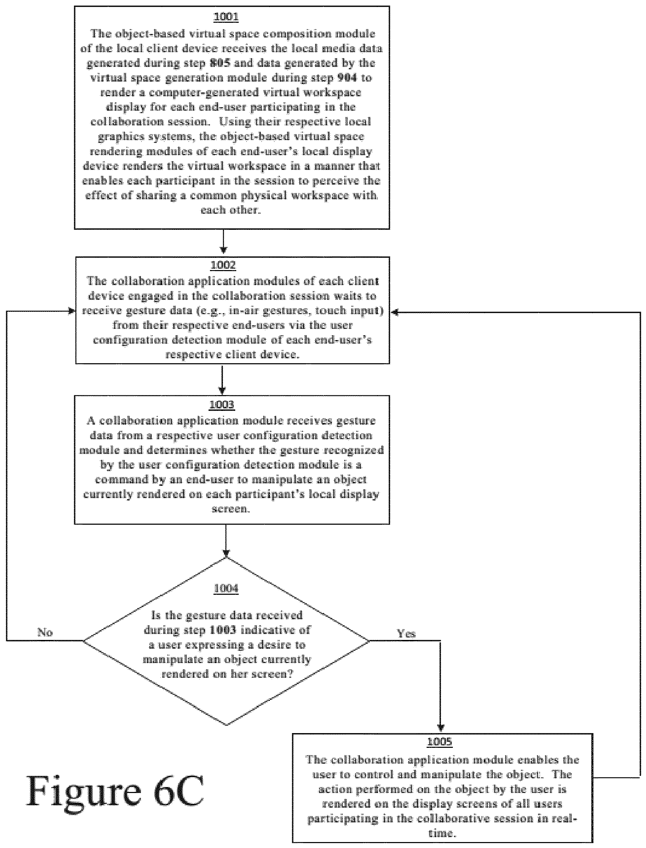

Figure **6C** is a flowchart of an exemplary computer-implemented method of contemporaneously rendering a virtual workspace display and detecting gesture input during a collaborative session performed over a communications network in accordance with embodiments of the present invention.

At step **1001**, the object-based virtual space composition module of the local client device receives the local media data generated during step **805** and data generated by the virtual space generation module during step **904** to render a computer-generated virtual workspace display for each end-user participating in the collaboration session. Using their respective local graphics systems, the object-based virtual space rendering modules of each end-user's local display device renders the virtual workspace in a manner that enables each participant in the session to perceive the effect of sharing a common physical workspace with each other.

At step **1002**, the collaboration application modules of each client device engaged in the collaboration session waits to receive gesture data (e.g., in-air gestures, touch input) from their respective end-users via the user configuration detection module of each end-user's respective client device.

At step **1003**, a collaboration application module receives gesture data from a respective user configuration detection module and determines whether the gesture recognized by the user configuration detection module is a command by an end-user to manipulate an object currently rendered on each participant's local display screen.

At step **1004**, a determination is made by the collaboration application module as to whether the gesture data received during step **1003** is indicative of a user expressing a desire to manipulate an object currently rendered on her screen. If the gesture is determined by the collaboration application module as not being indicative of a user expressing a desire to manipulate an object currently rendered on her screen, then the collaboration application modules of each client device engaged in the collaboration session continue waiting for gesture data, as detailed in step **1002.** If the gesture is determined by the collaboration application module as being indicative of a user expressing a desire to manipulate an object currently rendered on her screen, then the collaboration application enables the user to manipulate the object, as detailed in step **1005.**

At step **1005**, the gesture is determined by the collaboration application module as being indicative of a user expressing a desire to manipulate an object currently rendered on her screen, and therefore, the collaboration application enables the user to control and manipulate the object. The action performed on the object by the user is rendered on the display screens of all users participating in the collaborative session in real-time. Additionally, the system continues to wait for gesture data, as detailed in step **1002.**

### EXEMPLARY USE CASES FOR PERFORMING AUGMENTED REALITY-ENABLED INTERACTIONS AND COLLABORATIONS

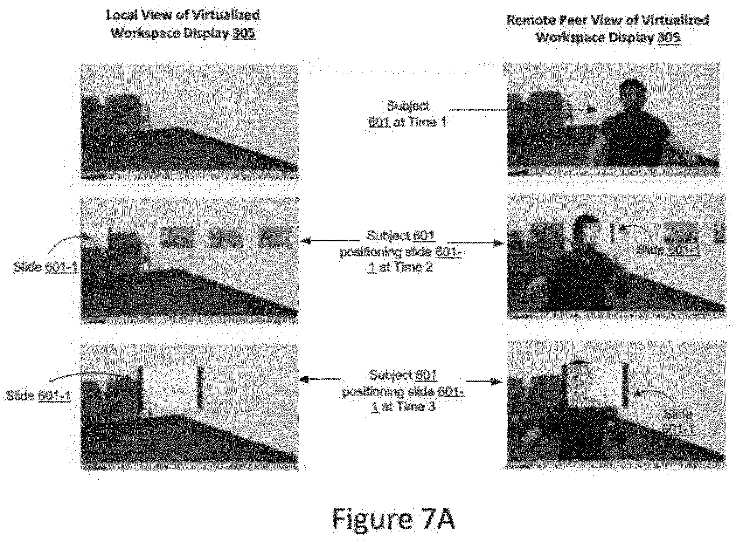

Figure **7A** depicts an exemplary slide presentation performed during a collaborative session in accordance with embodiments of the present invention. Figure **7A** simultaneously presents both a local user's view and a remote user's view of a virtualized workspace display generated by embodiments of the present invention (e.g., virtualized workspace display **305**) for the slide presentation. As illustrated in Figure **7A**, using a device similar to client device **101**, subject **601** can participate in a collaborative session over a communication network device with other remote participants using similar client devices. As such, embodiments of the present invention can encode and transmit their respective local collaboration application data in the manner described *herein.* For example, this data can include, but is not limited to, the spatial positioning of slides presented, display scale data, virtual pointer position data, control state data, etc. to the client devices of all remote users viewing the presentation (e.g., during Times 1 through 3).

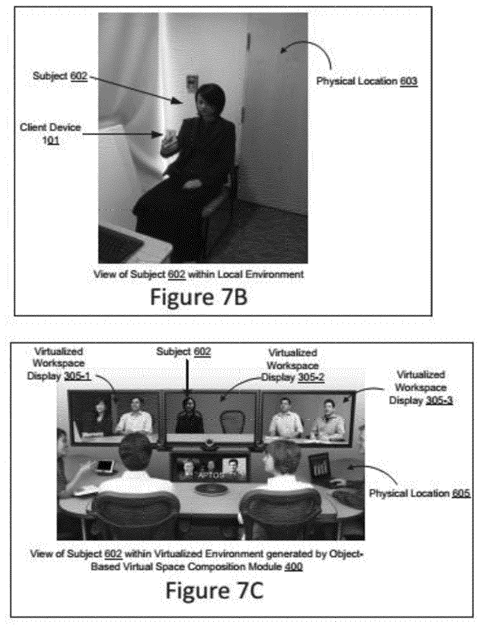

Figures **7B** and **7C** depict an exemplary telepresence session performed in accordance with embodiments of the present invention. With reference to Figure **7B**, subject **602** can be a user participating in a collaborative session with several remote users (e.g., via client device **101**) over a communications network. As illustrated in Figure **7B**, subject **602** can participate in the session from physical location **603**, which can be a hotel room, office room, etc. that is physically separated from other participants.

Figure **7C** depicts an exemplary virtualized workspace environment generated during a collaborative session in accordance with embodiments of the present invention. As depicted in Figure **7C**, embodiments of the present invention render virtualized workspace displays **305-1**, **305-2**, and **305-3** in a manner that enables each participant in the collaborative session (including subject **602**) to perceive the effect of sharing a common physical workspace with each other. As such, virtualized workspace displays **305-1**, **305-2**, and **305-3** include a background or "virtual room" that can be furnished with virtual furniture and/or other virtualized objects. Additionally, virtualized workspace displays **305-1**, **305-2**, and **305-3** can be adjusted and/or scaled in a manner designed to render each remote user in a consistent and uniform manner, irrespective of each user's current physical surroundings and/or distance from the user's camera. Furthermore, embodiments of the present invention allow users to set up layout of media objects in the shared virtual workspace depending on the type of interaction or collaboration. For instance, users can select a 2-dimensional shared conference space with simple background for visual interaction or a 3-dimensional shared conference space for visual interaction with media object collaboration.

In the foregoing specification, embodiments have been described with reference to numerous specific details that may vary from implementation to implementation. Thus, the sole and exclusive indicator of what is the invention, and is intended by the applicant to be the invention, is the set of claims that issue from this application, in the specific form in which such claims issue, including any subsequent correction. Hence, no limitation, element, property, feature, advantage, or attribute that is not expressly recited in a claim should limit the scope of such claim in any way. Accordingly, the specification and drawings are to be regarded in an illustrative rather than a restrictive sense.

## Claims

1. An apparatus comprising:
a sensor operable to capture a first set of sensor data concerning a local user's physical environment;
a receiver operable to receive a second set of sensor data over a communications network concerning a remote user's physical environment; and
a processor operable to render a virtual workspace display on a computer system using said first and second sets of sensor data, wherein said virtual workspace display comprises computer-generated room furnishings to produce a perceived effect of said local user and said remote user sharing a same physical room.

2. The apparatus as described in Claim 1,
wherein said first and second sets of sensor data comprise coordinate data gathered from a plurality of different sensors;
wherein said sensor is further operable to unify said coordinate data into a common spatial coordinate system for generating said virtual workspace display.

3. The apparatus as described in Claim 1, wherein said first and second sets of sensor data comprise coordinate data gathered from a plurality of different sensors; wherein said sensor is further operable to convert said coordinate data into a spatial coordinate system recognized by a specific sensor of said plurality of different sensors.

4. The apparatus as described in Claim 1, wherein said processor is further operable to process input received from said remote user over said communications network and/or said local user to manipulate an object currently rendered on said virtual workspace display.

5. The apparatus as described in Claim 4, wherein said processor is further operable to process in-air gesture input received from said remote user or said local user to manipulate said object.

6. The apparatus as described in any one of Claims 1 to 5, wherein said processor is further operable to perform computer-implemented segmentation procedures on said first set of sensor data to detect said local user within said local user's physical environment.

7. The apparatus as described in any one of Claims 1 to 5, wherein said processor is further operable to perform computer-implemented segmentation procedures on said first set of sensor data to detect an object of interested located within said local user's physical environment.

8. The apparatus as described in any one of Claims 1 to 7, wherein said virtual workspace display produces a perceived effect of said local user and a plurality of remote users sharing said same physical room.

9. The apparatus as described in Claim 8, wherein said processor is further operable to adjust said virtual workspace display according to a pre-determined lay-out conformity metric to render said plurality of remote users remote in a uniform manner.

10. A method of interacting over a network, said method comprising:
capturing a first set of sensor data concerning a local user's physical environment;
receiving a second set of sensor data over said communications network concerning a remote user's physical environment; and
rendering a virtual workspace display on a computer system using said first and second sets of sensor data, wherein said virtual workspace display comprises computer-generated room furnishings to produce a perceived effect of said local user and said remote user sharing a same physical room.

11. The method as described in Claim 10, wherein said first and second sets of sensor data comprise coordinate data gathered from a plurality of different sensors; wherein said capturing further comprises unifying said coordinate data into a common spatial coordinate system for generating said virtual workspace display.

12. The method as described in Claim 10, , wherein said first and second sets of sensor data comprise coordinate data gathered from a plurality of different sensors; wherein said capturing further comprises converting said coordinate data into a spatial coordinate system recognized by a specific sensor of said plurality of different sensors.

13. The method as described in any one of Claims 10 to 12, wherein said capturing further comprises performing computer-implemented segmentation procedures on said first set of sensor data to detect said local user within said local user's physical environment.

14. The method as described in any one of Claims 10 to 12, wherein said capturing further comprises performing computer-implemented segmentation procedures on said first set of sensor data to detect an object of interest located within said local user's physical environment.

15. The method as described in any one of Claims 10 to 14, wherein said virtual workspace display produces a perceived effect of said local user and a plurality of remote users sharing said same physical room.

16. The method as described in Claim 15, wherein said rendering further comprises adjusting said virtual workspace display according to a pre-determined lay-out conformity metric to render said plurality of remote users remote in a uniform manner.

17. The method as described in Claim 10, wherein said rendering further comprises processing input received from said remote user over said communications network and/or said local user to manipulate an object currently rendered on said virtual workspace display.

18. The method as described in Claim 17, wherein said processing further comprises processing in-air gesture input received from said remote user or said local user to manipulate said object.
